# EUROPEAN PATENT APPLICATION

(11) **EP 4 810 356 A1**
(43) Date of publication of application: **23.09.2026**
(21) Application number: 26165640.9
(22) Date of filing: 18.03.2026
(51) Int. Cl.: B62D 25/08, B62D 21/02, B62D 21/15

(54) **VEHICLE FRAME STRUCTURE**

(30) Priority: 21.03.2025 JP 2025047340
(71) Applicant: Toyota Jidosha Kabushiki Kaisha, Toyota-shi, Aichi-ken 471-8571 (JP)
(72) Inventor: SAEKI, Koji, TOYOTA-SHI, AICHI-KEN, 471-8571 (JP)
(74) Representative: Cabinet Beau de Loménie

(57) **Abstract**

A vehicle frame structure includes: a front frame portion (12) structured to include a pair of left and right front side member portions (14) extending in a vehicle longitudinal direction at a vehicle front portion, and a pair of left and right apron upper member portions (16) disposed at a vehicle upper side and vehicle transverse direction outer sides of the front side member portions (14); and a reinforcing frame (30) fixed to the front frame portion (12), wherein the reinforcing frame (30) is structured to include a front frame (32) connecting the pair of left and right front side member portions (14) together in a vehicle transverse direction, a pair of left and right side frames (34) respectively extending toward a vehicle rear side from vehicle transverse direction both end portions of the front frame (32) and connected to the apron upper member portions, a rear frame (38) disposed further toward a vehicle rear side than the front frame (32), extending in the vehicle transverse direction, and connecting the pair of left and right apron upper member portions (16), and a pair of left and right inclined frames (36) extending at inclines toward a vehicle rear side and vehicle transverse direction inner sides from connection portions (P2) at which the front frame and the side frames (34) are connected, and connected to the rear frame (38).

## Description

### BACKGROUND

### Technical Field

The present disclosure relates to a vehicle frame structure.

### Related Art

Japanese Patent Application Laid-Open (JP-A) No. 2018-135079 discloses a structure in which apron members (apron upper members) and a radiator shroud are connected by shroud members.

In the structure described in JP-A No. 2018-135079, at the time of a front collision of the vehicle (hereinafter appropriately called "at the time of a front collision"), collision load is transmitted from the radiator to the apron upper members via the shroud members. However, there is room for improvement from the standpoint of effectively suppressing deformation of the vehicle front portion at the time of a front collision.

### SUMMARY

The present disclosure provides a vehicle frame structure that can effectively suppress deformation of a vehicle front portion at the time of a front collision of the vehicle.

A vehicle frame structure of a first aspect includes: a front frame portion structured to include a pair of left and right front side member portions extending in a vehicle longitudinal direction at a vehicle front portion, and a pair of left and right apron upper member portions disposed at a vehicle upper side and vehicle transverse direction outer sides of the front side member portions; and a reinforcing frame fixed to the front frame portion, wherein the reinforcing frame is structured to include a front frame connecting the pair of left and right front side member portions together in a vehicle transverse direction, a pair of left and right side frames respectively extending toward a vehicle rear side from vehicle transverse direction both end portions of the front frame and connected to the apron upper member portions, a rear frame disposed further toward a vehicle rear side than the front frame and extending in the vehicle transverse direction and connecting the pair of left and right apron upper member portions, and a pair of left and right inclined frames extending at inclines toward a vehicle rear side and vehicle transverse direction inner sides from connection portions at which the front frame and the side frames are connected, and connected to the rear frame.

In the vehicle frame structure of the first aspect, the front frame portion is structured to include the front side member portions and the apron upper member portions. The front side member portions are provided as a left-right pair, and extend in the vehicle longitudinal direction at the vehicle front portion. The apron upper member portions are provided as a left-right pair, and are disposed at the vehicle upper side and vehicle transverse direction outer sides of the front side member portions. Further, the reinforcing frame is fixed to the front frame portion.

Here, the reinforcing frame has the front frame that connects the pair of front side member portions together in the vehicle transverse direction. The pair of left and right side frames respectively extend toward the vehicle rear side from the vehicle transverse direction both end portions of the front frame. The rear frame that extends in the vehicle transverse direction is disposed further toward the vehicle rear side than the side frames. Moreover, the reinforcing frame has the pair of left and right inclined frames that extend at inclines toward the vehicle rear side and vehicle transverse direction inner sides from the connection portions at which the front frame and the side frames are connected. These inclined frames are connected to the rear frame. Due thereto, a truss structure can be formed by the front frame, the side frames, the rear frame and the inclined frames. When collision load is inputted at the time of a front collision of the vehicle, deformation of the vehicle front portion can be suppressed effectively by the reinforcing frame. Note that what is called "a rear frame ... connecting the pair of left and right apron upper member portions" here is not limited to a structure in which the rear frame directly joins the pair of left and right apron upper member portions, and is a concept broadly encompassing structures that connect the apron upper member portions via other members such as the side frames.

In a vehicle frame structure of a second aspect, in the first aspect, the side frames extend toward a vehicle rear side and vehicle transverse direction outer sides.

**In** the vehicle frame structure of the second aspect, because the side frames extend toward the vehicle rear side and vehicle transverse direction outer sides, the truss structure can be ensured to be large.

In a vehicle frame structure of a third aspect, in the first aspect, suspension tower portions are provided between the front side member portions and the apron upper member portions, and the connection portions of the front frame and the side frames are disposed further toward a vehicle front side than the suspension tower portions.

In the vehicle frame structure of the third aspect, at further toward the vehicle front side than the suspension tower portions, the collision load can be dispersed at the left and the right.

In a vehicle frame structure of a fourth aspect, in the third aspect, connection portions of the rear frame and the apron upper member portions are disposed further toward a vehicle rear side than the suspension tower portions.

In the vehicle frame structure of the fourth aspect, because load is dispersed at the front and the rear of the suspension tower portions by the inclined frames and the rear frame, outwardly opening deformation of the apron upper member portions can be suppressed effectively.

In a vehicle frame structure of a fifth aspect, in the third aspect or the fourth aspect, the rear frame is fixed to the suspension tower portions.

In the vehicle frame structure of the fifth aspect, collision load can be transmitted to the suspension tower portions, and some of the load can be borne at the suspension tower portions.

In a vehicle frame structure of a sixth aspect, in the first aspect, convex portions that bulge out toward vehicle outer sides are provided at the side frames, between the front frame and the rear frame.

In the vehicle frame structure of the sixth aspect, even in a case in which convex portions are provided at the side frames, outwardly opening deformation can be suppressed by the truss structure.

In a vehicle frame structure of a seventh aspect, in the first aspect, a connection portion of one of the inclined frames and the rear frame, and a connection portion of another of the inclined frames and the rear frame, are disposed with an interval therebetween in the vehicle transverse direction.

In the vehicle frame structure of the seventh aspect, the connection portions of the inclined frames and the rear frame are disposed with an interval therebetween in the vehicle transverse direction. Therefore, load can be dispersed without concentrating at one point.

In a vehicle frame structure of an eighth aspect, in the first aspect, as seen in a plan view, a vehicle transverse direction central portion of the rear frame is positioned further toward a vehicle front side than vehicle transverse direction end portions of the rear frame.

In the vehicle frame structure of the eighth aspect, the vehicle transverse direction central portion of the rear frame is positioned at the vehicle front side. Therefore, deformation of the reinforcing frame can be suppressed even in a case in which tensile load arises in the vehicle transverse direction with respect to the rear frame at the time of input of collision load.

In a vehicle frame structure of a ninth aspect, in the first aspect, the front frame portion is formed integrally by casting.

In the vehicle frame structure of the ninth aspect, the number of parts and the manpower involved in manufacturing can be reduced as compared with a structure in which the front frame portion is formed by plural parts.

In a vehicle frame structure of a tenth aspect, in the first aspect, the front frame is fixed to an upper end portion of a radiator.

In the vehicle frame structure of the tenth aspect, the radiator can be made to bear some of the load at the time of a front collision.

As described above, in accordance with the vehicle frame structure relating to the present disclosure, deformation of the vehicle front portion at the time of a front collision of the vehicle can be suppressed effectively.

### BRIEF DESCRIPTION OF THE DRAWINGS

An exemplary embodiment of the present disclosure will be described in detail based on the following figures, wherein:
Fig. 1 is a schematic plan view of a front frame portion structuring a vehicle frame structure relating to an embodiment;
Fig. 2 is a schematic plan view of the vehicle frame structure relating to the embodiment;
Fig. 3 is a schematic plan view of a vehicle frame structure relating to a first modified example;
Fig. 4 is a schematic plan view of a vehicle frame structure relating to a second modified example;
Fig. 5 is a schematic plan view of a vehicle frame structure relating to a third modified example; and
Fig. 6 is a schematic plan view of a vehicle frame structure relating to a fourth modified example.

### DETAILED DESCRIPTION

A vehicle frame structure relating to an embodiment is described with reference to the drawings. Note that arrow FR and arrow RH in the respective drawings indicate the vehicle forward direction and the vehicle rightward direction of a vehicle. In the following description, when longitudinal, vertical and left-right directions are used without being specified, they refer to the longitudinal of the vehicle longitudinal direction, the vertical of the vehicle vertical direction, and the left and right of the vehicle left-right direction (transverse /direction), respectively.

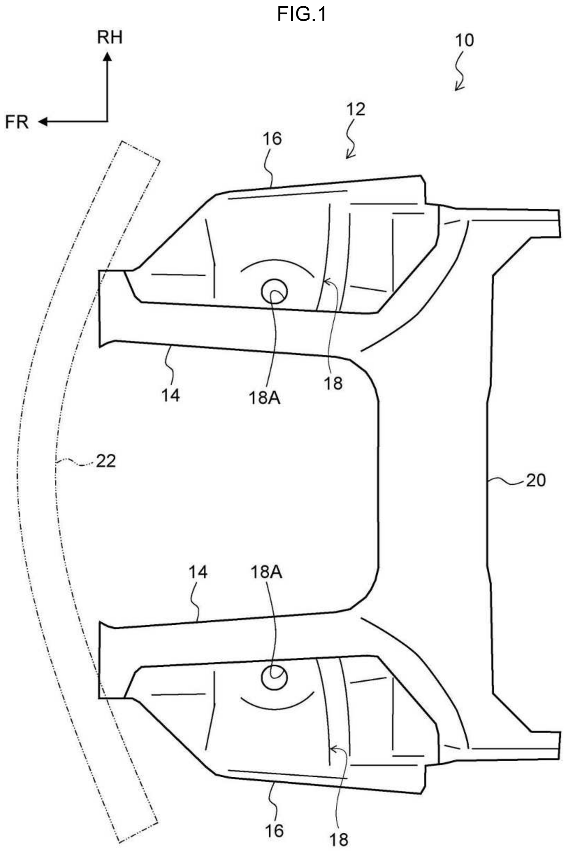

Fig. 1 is a schematic plan view of a front frame portion 12 structuring a vehicle frame structure relating to the embodiment. As illustrated in Fig. 1, the front frame portion 12 that is formed integrally by casting (die casting) is provided at the front portion of a vehicle 10 to which the vehicle frame structure of the present embodiment is applied. The front frame portion 12 is structured to include a pair of left and right front side member portions 14, a pair of left and right apron upper member portions 16, and a pair of left and right suspension tower portions 18.

Note that the vehicle 10 of the present embodiment is an electric vehicle such as a BEV (Battery Electric Vehicle) that uses a motor for the motive power thereof, but the present disclosure is not limited to this and may be applied to another type of vehicle. For example, the present disclosure may be applied to an FCEV (Fuel Cell Electric Vehicle), an HEV (Hybrid Electric Vehicle), or a PHEV (Plug-in Hybrid Electric Vehicle). Further, the present disclosure may be applied to an engine-powered vehicle that uses only an engine for the motive power thereof.

The front side member portions 14 are provided at the vehicle transverse direction both sides of the vehicle front portion, and respectively extend in the vehicle longitudinal direction. The rear end portions of the front side member portions 14 are connected together in the vehicle transverse direction by a dash portion 20. The dash portion 20 extends in the vehicle transverse direction and separates the passenger compartment interior and the passenger compartment exterior.

A bumper reinforcement 22 is mounted either directly or via crash boxes or the like to the front ends of the front side member portions 14.

The apron upper member portions 16 are provided at the vehicle upper sides and vehicle transverse direction outer sides of the front side member portions 14. The apron upper member portions 16 are provided as a left-right pair, and respectively extend in the vehicle longitudinal direction, and structure upper lateral frames of the vehicle 10. The front ends of the apron upper member portions 16 are connected to the front side member portions 14. The rear ends of the apron upper member portions 16 are positioned further toward the vehicle upper side than the front ends thereof and are connected to unillustrated front pillars.

The suspension tower portions 18 are provided between the front side member portions 14 and the apron upper member portions 16. The suspension tower portions 18 are provided as a left-right pair, and an unillustrated suspension is disposed beneath the suspension tower portions 18. Mounting holes 18A to which the suspension is mounted are formed in the upper ends of the suspension tower portions 18.

Note that the front frame portion 12 is not limited to the structure illustrated in Fig. 1. For example, a structure in which crash boxes are formed integrally with the front ends of the front side member portions 14 may be employed. Further, a structure in which portions of the front pillars are formed integrally with the vehicle transverse direction both end portions of the dash portion 20 may be employed. Moreover, the pair of left and right front side member portions 14 illustrated in Fig. 1 are inclined slightly with respect to the vehicle longitudinal direction as seen in a plan view such that the front portions thereof are positioned further toward the vehicle transverse direction outer sides than the rear portions thereof. However, the present disclosure is not limited to this, and the pair of left and right front side member portions may be disposed parallel to one another along the vehicle longitudinal direction.

Further, as an example, the front frame portion 12 of the present embodiment is formed of a metal whose main component is aluminum, but the present disclosure is not limited to this, and the front frame portion 12 may be formed of another metal.

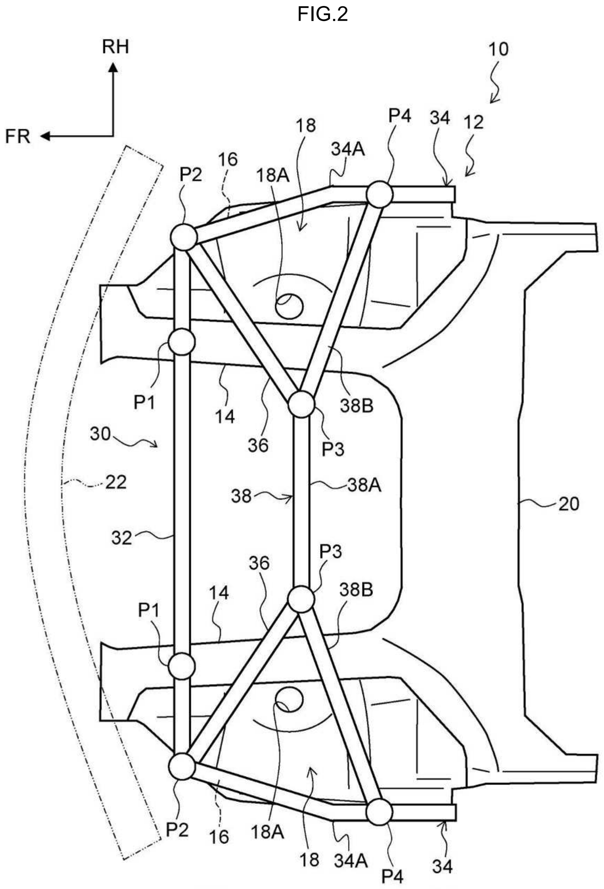

Fig. 2 is a schematic plan view of the vehicle frame structure relating to the embodiment. As illustrated in Fig. 2, in the present embodiment, a reinforcing frame 30 is fixed to the upper portion of the front frame portion 12. The reinforcing frame 30 is structured to include a front frame 32, side frames 34, inclined frames 36, and a rear frame 38.

Note that, in the present embodiment, as an example, the respective frames that structure the reinforcing frame 30 are formed by metal members that are shaped as elongated plates, but the present disclosure is not limited to this. For example, at least some of the frames that structure the reinforcing frame 30 may be closed cross-sectional structures. Further, at least some of the frames structuring the reinforcing frame 30 may be formed by resin members, or may be formed by members that combine metal and resin.

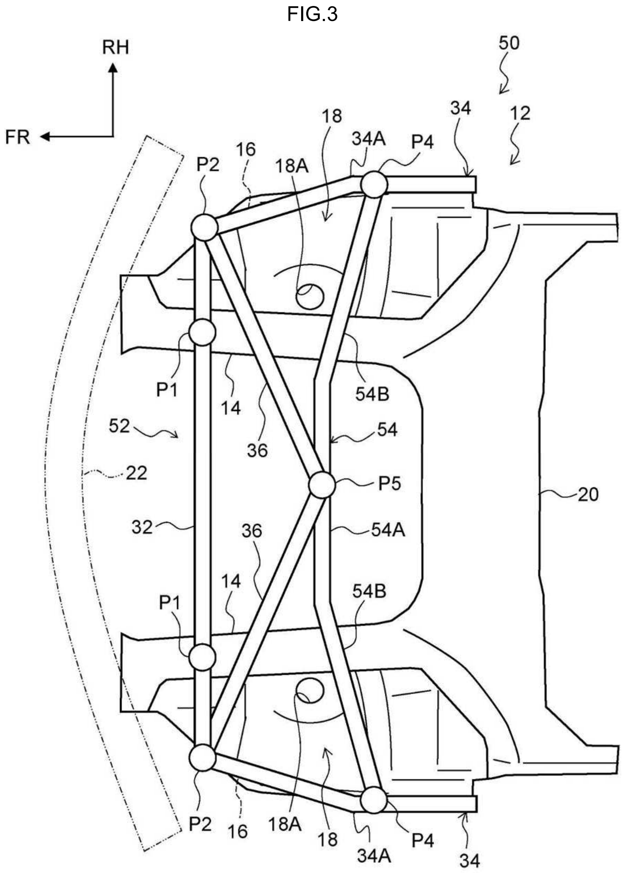

The front frame 32 is disposed above the front side member portions 14 and extends in the vehicle transverse direction. Further, the front frame 32 is disposed further toward the vehicle front side than the suspension tower portions 18, and is mounted to the front side member portions 14 at left and right connection portions P1. Note that connection portions P1, P2, P3 and P4 illustrated in Fig. 2 and Fig. 3 are depicted for convenience of the explanation, and may differ from the actual shapes thereof.

For example, at the connection portions P1, the front frame 32 is mechanically fastened to the front side member portions 14 by fasteners such as bolts. Specifically, at the right-side connection portion P1, the right-side front side member portion 14 and the front frame 32 are mechanically fastened. At the left-side connection portion P1, the left-side front side member portion 14 and the front frame 32 are mechanically fastened. In this way, the pair of front side member portions 14 are connected together in the vehicle transverse direction by the front frame 32. Note that the front frame 32 may be connected to the front side member portions 14 at the connection portions P1 via brackets or the like that are separate bodies.

The side frames 34 are provided as a left-right pair, and respectively extend toward the vehicle rear side from the vehicle transverse direction both end portions of the front frame 32, and are connected to the above-described apron upper member portions. Specifically, the side frames 34 are disposed above the apron upper member portions 16, and the front ends of the side frames 34 are joined to the vehicle transverse direction end portions of the front frame 32 at the connection portions P2.

In the present embodiment, as an example, the front frame 32 and the side frames 34 are mechanically fastened, but the present disclosure is not limited to this, and the front frame 32 and the side frames 34 may be joined by welding or the like. Or, the front frame 32 and the side frames 34 may be joined by another means.

As seen in a plan view, the side frames 34 are inclined such that the rear portions thereof are positioned further toward the vehicle transverse direction outer sides than the front portions thereof. Convex portions 34A that bulge out toward the vehicle outer sides are provided at the side frames 34 between the front frame 32 and the rear frame 38.

The side frames 34 are fixed to the apron upper member portions 16 at at least one of the connection portions P2 that are at the front, the connection portions P4 that are at the rear, and at least one other location. In the present embodiment, as an example, the side frames 34 and the apron upper member portions 16 are fastened mechanically at the connection portions P2 and the connection portions P4.

Here, the connection portions P2 between the front frame 32 and the side frames 34 are set to be further toward the vehicle transverse direction outer sides than the front side member portions 14. Therefore, in the present embodiment, the front frame 32 extends further toward the vehicle transverse direction outer sides than the front side member portions 14. Further, the inclined frames 36 extend from the connection portions P2 toward the vehicle rear side and the vehicle transverse direction inner sides.

The inclined frames 36 are provided as a left-right pair, and, as seen in a plan view, are inclined such that the rear portions thereof are positioned further toward the vehicle transverse direction inner sides than the front portions. Further, at the connection portions P2, the front ends of the inclined frames 36 are fastened, together with the front frame 32 and the side frames 34, to the apron upper member portions 16.

The rear ends of the inclined frames 36 are positioned further toward the vehicle transverse direction inner sides than the front side member portions 14, and are fastened to the rear frame 38 at the connection portions P3.

The rear frame 38 is disposed further toward the vehicle rear side than the front frame 32, and extends in the vehicle transverse direction, and connects, in the vehicle transverse direction, the rear ends of the pair of left and right inclined frames 36 together. Further, in the present embodiment, as an example, the rear frame 38 is structured to include a frame central portion 38A positioned at the vehicle transverse direction center, and frame end portions 38B extending toward the vehicle transverse direction outer sides from the frame central portion 38A.

At the rear frame 38, as seen in a plan view, the frame central portion 38A is positioned further toward the vehicle front side than the frame end portions 38B. Further, in the present embodiment, the boundaries between the frame central portion 38A and the frame end portions 38B are the connection portions P3. The pair of left and right apron upper member portions 16 are connected together in the vehicle transverse direction by the rear frame 38.

The frame end portions 38B are inclined such that, as seen in a plan view, the rear portions thereof are positioned further toward the vehicle rear side than the front portions. The vehicle transverse direction outer side end portions of the frame end portions 38B are connected to at least one of the side frames 34 and the apron upper member portions 16, at the connection portions P4 that are further toward the rear than the suspension tower portions 18. In the present embodiment, as an example, the frame end portions 38B are joined to both the side frames 34 and the apron upper member portions 16 at the connection portions P4, but the present disclosure is not limited to this. For example, the end portions of the frame end portions 38B may be connected to only the side frames 34, or may be connected to only the apron upper member portions 16.

The connection portion P3 of one of the inclined frames 36 and the rear frame 38, and the connection portion P3 of the another of the inclined frames 36 and the rear frame 38, are disposed with an interval therebetween in the vehicle transverse direction. In the present embodiment, as an example, the both ends of the frame central portion 38A that extends in the vehicle transverse direction are the connection portions P3, and the one connection portion P3 and the another connection portion P3 are set at positions that are symmetrical with respect to the center of the vehicle 10.

### (Operation)

Operation of the vehicle frame structure relating to the present embodiment is described next.

In the vehicle frame structure relating to the present embodiment, as illustrated in Fig. 1, the front frame portion 12 is structured to include the front side member portions 14, the apron upper member portions 16, and the suspension tower portions 18. The front side member portions 14 are provided as a left-right pair, and extend in the vehicle longitudinal direction at the vehicle front portion. The apron upper member portions 16 are provided as a left-right pair, and are disposed at the vehicle upper sides and the vehicle transverse direction outer sides of the front side member portions 14. Further, at the front frame portion 12 of the present embodiment, the portion thereof that includes the front side member portions 14, the apron upper member portions 16 and the suspension tower portions 18 is formed integrally by casting. Due thereto, the number of parts and the manpower involved in manufacturing can be reduced as compared with a structure in which the front frame portion 12 is formed by plural parts.

Further, in the present embodiment, as illustrated in Fig. 2, the reinforcing frame 30 is fixed to the front frame portion 12. Here, the reinforcing frame 30 has the front frame 32 that connects the pair of front side member portions 14 together in the vehicle transverse direction. Further, the pair of left and right side frames 34 extend toward the vehicle rear side from the vehicle transverse direction both end portions of the front frame 32, respectively. The rear frame 38 that extends in the vehicle transverse direction is disposed further toward the vehicle rear side than the side frames 34. Moreover, the reinforcing frame 30 has the pair of left and right inclined frames 36 that extend at inclines toward the vehicle rear side and the vehicle transverse direction inner sides from the connection portions P2 at which the front frame 32 and the side frames 34 are connected. These inclined frames 36 are connected to the rear frame 38. Due thereto, a truss structure can be formed by the front frame 32, the side frames 34, the rear frame 38 and the inclined frames 36, and, when collision load is inputted at the time of a front collision of the vehicle 10, deformation of the vehicle front portion can be suppressed effectively by the reinforcing frame 30.

Further, in the present embodiment, because the side frames 34 extend toward the vehicle rear side and the vehicle transverse direction outer sides, the truss structure can be ensured to be large. In particular, in the present embodiment, the convex portions 34A are provided at the side frames 34, but in such a case, outwardly opening deformation can be suppressed by the truss structure.

Moreover, in the present embodiment, the connection portions P2 of the front frame 32 and the side frames 34 are set further toward the vehicle front side than the suspension tower portions 18. Therefore, at further toward the vehicle front side than the suspension tower portions 18, the collision load can be dispersed at the left and the right.

In the present embodiment, because load can be dispersed at the front and the rear of the suspension tower portions 18 by the inclined frames 36 and the rear frame 38, outwardly opening deformation of the apron upper member portions 16 can be suppressed effectively.

Further, in the present embodiment, the connection portions P3 of the inclined frames 36 and the rear frame 38 are disposed with an interval therebetween in the vehicle transverse direction. Therefore, load can be dispersed without concentrating at one point.

Still further, in the present embodiment, the frame central portion 38A of the vehicle transverse direction central portion of the rear frame 38 is positioned at the vehicle front side. Therefore, deformation of the reinforcing frame 30 can be suppressed even in a case in which tensile load arises in the vehicle transverse direction with respect to the rear frame 38 at the time of input of collision load.

Specifically, when collision load is inputted at the time of a front collision of the vehicle 10, loads directed in the opposite direction are generated respectively at the frame end portions 38B of the rear frame 38 in order to suppress outwardly opening deformation of the side frames 34. In contrast, at the inclined frames 36, compressive loads are generated due to the input of load from the vehicle front side. Namely, compressive loads and tensile loads are generated at the front and the rear of the frame central portion 38A, and outwardly opening deformation of the apron upper member portions 16 can be suppressed effectively.

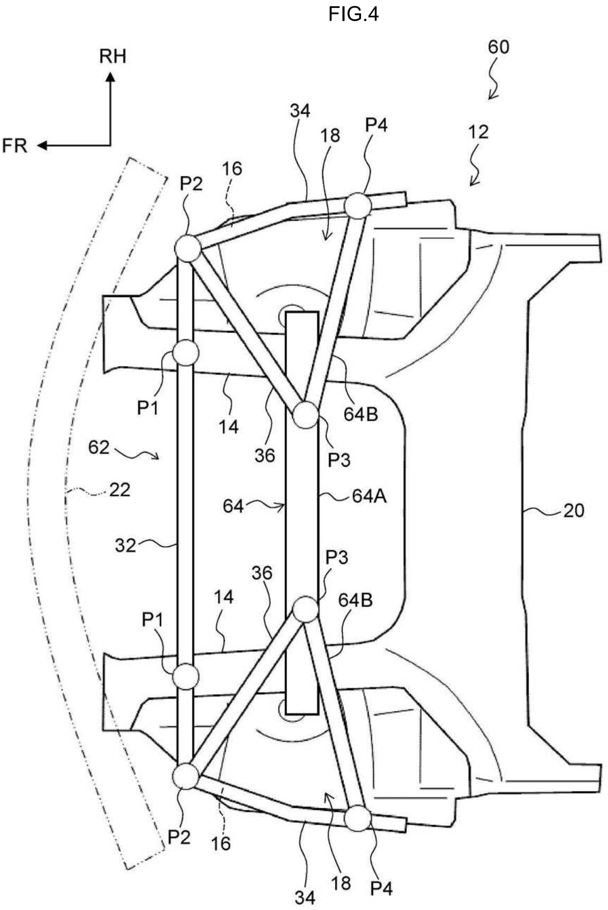

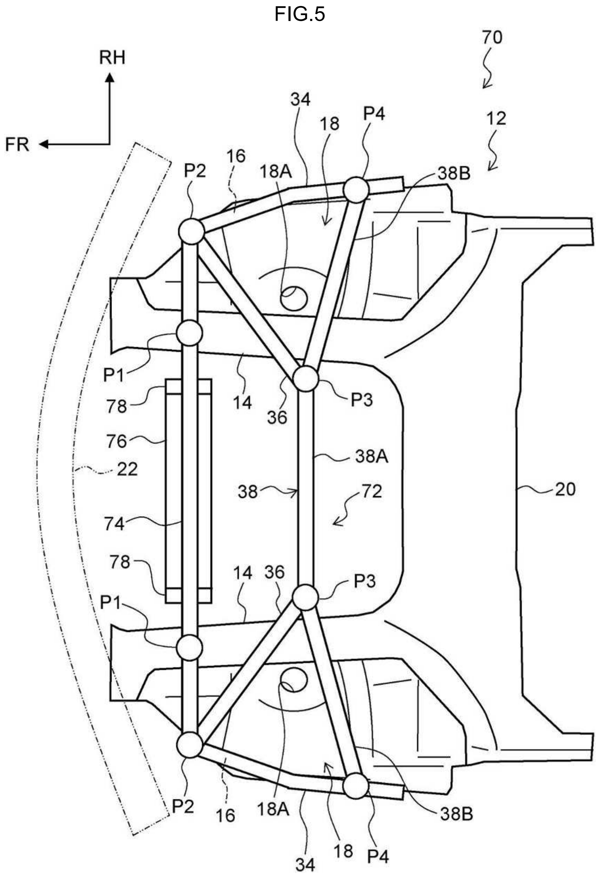

Note that, although the connection portions P3 of the inclined frames 36 and the rear frame 38 are provided at two places in the present embodiment, the present disclosure is not limited to this, and the structure of a first modified example illustrated in Fig. 3 may be employed. Further, the structures of a second modified example illustrated in Fig. 4 and a third modified example illustrated in Fig. 5 may be employed as modified examples of the present embodiment.

### (First Modified Example)

Fig. 3 is a schematic plan view of a vehicle frame structure relating to a first modified example. As illustrated in Fig. 3, vehicle 50, to which a vehicle frame structure relating to the present modified example is applied, differs from the embodiment with respect to the point that the pair of left and right inclined frames 36 are connected to a rear frame 54 at one place.

A reinforcing frame 52 of the present modified example is structured to include the front frame 32, the side frames 34, the inclined frames 36 and the rear frame 54.

As seen in a plan view, the vehicle transverse direction central portion of the rear frame 54 is positioned further toward the vehicle front side than the vehicle transverse direction end portions thereof, and the rear frame 54 is formed by an elongated, plate-shaped member. Further, the both end portions of the rear frame 54 are connected to the side frames 34 at the connection portions P4, respectively.

Here, connection portion P5 is set at the vehicle transverse direction center of the rear frame 54. The rear ends of the pair of left and right inclined frames 36 are respectively connected at this connection portion P5. In the present embodiment, as an example, the pair of left and right inclined frames 36 are both fastened to the rear frame 54 at the connection portion P5.

In accordance with the present modified example, the pair of left and right inclined frames 36 are connected to the rear frame 54 at the one connection portion P5. Therefore, as seen in a plan view, a triangular frame is formed by the front frame 32 and the pair of inclined frames 36, and the effects of the truss structure can be improved.

### (Second Modified Example)

Fig. 4 is a schematic plan view of a vehicle frame structure relating to a second modified example. As illustrated in Fig. 4, in vehicle 60 to which a vehicle frame structure relating to the present modified example is applied, a rear frame 64 is provided instead of the rear frame 38 of the embodiment.

The vehicle 60 to which the vehicle frame structure of the present modified example is applied has a reinforcing frame 62. The reinforcing frame 62 is structured to include the front frame 32, the side frames 34, the inclined frames 36 and the rear frame 64.

The rear frame 64 is formed by plural elongated, plate-shaped members being joined together, and is structured to include a frame central portion 64A disposed at the vehicle transverse direction center, and a pair of left and right frame end portions 64B extending at inclines toward the vehicle rear side and the vehicle transverse direction outer sides from the frame central portion 64A.

The frame central portion 64A is disposed at the vehicle rear side of the front frame 32, and extends in the vehicle transverse direction, and the length thereof is shorter than that of the front frame 32. Further, as an example, the width of the frame central portion 64A of the present modified example is wider than that of the rear frame 38 of the embodiment, but the present disclosure is not limited to this. Further, the frame central portion 64A may be formed by a member having a closed cross-sectional shape.

The both end portions of the frame central portion 64A respectively extend further toward the vehicle transverse direction outer sides than the connection portions P3, and are mechanically fastened to the suspension tower portions 18 by fasteners such as bolts. Therefore, the inclined frames 36 are connected to the front frame portion 12 via the frame central portion 64A.

The frame end portions 64B extend toward the vehicle rear side and vehicle transverse direction outer sides from the connection portions P3 that are set at the frame central portion 64A at further toward the vehicle transverse direction inner sides than the front side member portions 14. The frame end portions 64B are connected to the side frames 34 at the connection portions P4.

In accordance with the present modified example, the inclined frames 36 are connected to the front frame portion 12 via the rear frame 64. Therefore, collision load can be transmitted from the front frame 32 to the front frame portion 12 via the front frame 32, the inclined frames 36 and the rear frame 64.

Further, in the present modified example, the both end portions of the frame central portion 64A that structures the rear frame 64 are fixed to the suspension tower portions 18. Therefore, load inputted from the suspension tower portions 18 can be dispersed via the rear frame 64.

### (Third Modified Example)

Fig. 5 is a schematic plan view of a vehicle frame structure relating to a third modified example. As illustrated in Fig. 5, vehicle 70 to which a vehicle frame structure relating to the present modified example is applied differs from the embodiment with respect to the point that a front frame 74 is fixed to a radiator 76.

A reinforcing frame 72 that structures the vehicle frame structure of the present modified example is structured to include the front frame 74, the side frames 34, the inclined frames 36 and the rear frame 38. The front frame 74 extends in the vehicle transverse direction and connects the left and right front side member portions 14 together in the vehicle transverse direction.

Here, the radiator 76 is disposed between the left and right front side member portions 14. The radiator 76 has, at the interior thereof, a flow path through which coolant flows, and is a heat exchanger that carries out heat exchange between traveling wind and the coolant.

Here, the vehicle transverse direction central portion of the front frame 74 is fixed to the upper end portion of the radiator 76. Namely, the front frame 74 of the present modified example also has the function of a radiator support for fixing the radiator 76.

Radiator side supports 78 are disposed at the vehicle transverse direction both sides of the radiator 76. The radiator side supports 78 fix the vehicle transverse direction both end portions of the radiator 76, and respectively extend in the vehicle vertical direction. The upper ends of the radiator side supports 78 are fixed to the front frame 74. In this way, the front frame 74 of the present modified example functions as a radiator upper support that structures the upper portion of the radiator support.

In accordance with the present modified example, it suffices to not provide a radiator upper support that is used exclusively for that purpose, and the number of parts can be reduced. Further, due to some of the collision load being transmitted from the front frame 74 to the radiator 76, the radiator can be made to bear some of the collision load.

Although a vehicle frame structure relating to the present disclosure has been described above, the present disclosure can, of course be implemented in various forms within a scope that does not depart from the gist thereof. For example, although the front ends of the apron upper member portions 16 are connected to the front side member portions 14 in the above-described embodiment, the present disclosure is not limited to this. The front side member portions 14 and the apron upper member portions 16 may be connected via the front frame 32 of the reinforcing frame 30.

Further, in the above-described embodiment, as illustrated in Fig. 2, the front frame 32, the side frames 34, the inclined frames 36 and the rear frame 38 that structure the reinforcing frame 30 are formed so have substantially the same widths, but the present disclosure is not limited to this. For example, some of the frames may be formed to be wider in accordance with the required load resistance.

Moreover, although the convex portions 34A that are bent portions are provided at the side frames 34 in the above-described embodiment, the present disclosure is not limited to this. For example, there may be a structure in which portions of the side frames 34 are curved so as to bulge out toward the vehicle transverse direction outer sides. In this case, the curved portions are the convex portions of the present disclosure. Further, a structure may be employed in which the convex portions are not provided, and the side frames extend substantially rectilinearly in the vehicle longitudinal direction.

Still further, in order to realize a frame that better resembles a truss structure, a pair of connecting frames, which connect the vehicle transverse direction center of the front frame 32 and the pair of left and right connection portions P3 respectively, may be provided separately. In this case, the frame-shaped portion that is surrounded by the front frame 32, the inclined frames 36 and the frame central portion 38A is divided into three equal portions by the pair of connecting frames, and a truss structure can be formed.

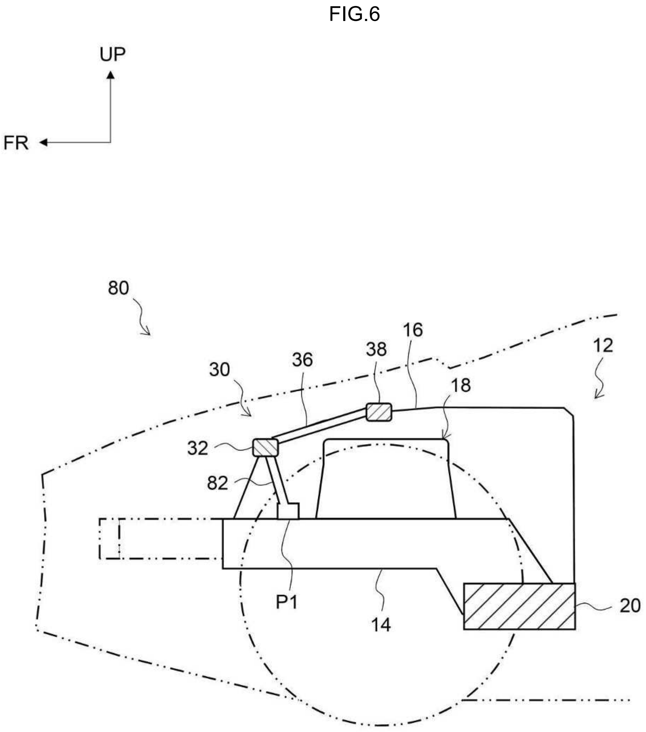

Further, as illustrated in Fig. 6, the front frame 32 may be connected to the front side member portions 14 at the connection portions P1 via brackets 82 that are separate bodies. Specifically, in a vehicle 80 relating to a fourth modified example that is illustrated in Fig. 6, the front frame 32 is positioned further toward the vehicle upper side than the front side member portions 14. The front side member portions 14 and the front frame 32 are connected by the brackets 82, and the brackets 82 are connected to the front side member portions 14 at the connection portions P1.

The following notes are disclosed in relation to the above-described embodiment.

### (Note 1)

A vehicle frame structure having:
a front frame portion structured to include a pair of left and right front side member portions extending in a vehicle longitudinal direction at a vehicle front portion, and a pair of left and right apron upper member portions disposed at a vehicle upper side and vehicle transverse direction outer sides of the front side member portions; and
a reinforcing frame fixed to the front frame portion,
wherein the reinforcing frame is structured to include a front frame connecting the pair of left and right front side member portions together in a vehicle transverse direction, a pair of left and right side frames respectively extending toward a vehicle rear side from vehicle transverse direction both end portions of the front frame and connected to the apron upper member portions, a rear frame disposed further toward a vehicle rear side than the front frame and extending in the vehicle transverse direction and connecting the pair of left and right apron upper member portions, and a pair of left and right inclined frames extending at inclines toward a vehicle rear side and vehicle transverse direction inner sides from connection portions at which the front frame and the side frames are connected, and connected to the rear frame.

### (Note 2)

The vehicle frame structure of Note 1, wherein the side frames extend toward a vehicle rear side and vehicle transverse direction outer sides.

### (Note 3)

The vehicle frame structure of Note 1 or 2, wherein
suspension tower portions are provided between the front side member portions and the apron upper member portions, and
the connection portions of the front frame and the side frames are disposed further toward a vehicle front side than the suspension tower portions.

### (Note 4)

The vehicle frame structure of Note 3, wherein connection portions of the rear frame and the apron upper member portions are disposed further toward a vehicle rear side than the suspension tower portions.

### (Note 5)

The vehicle frame structure of Note 3 or 4, wherein the rear frame is fixed to the suspension tower portions.

### (Note 6)

The vehicle frame structure of any one of Note 1 through 5, wherein convex portions that bulge out toward vehicle outer sides are provided at the side frames, between the front frame and the rear frame.

### (Note 7)

The vehicle frame structure of any one of Note 1 through 6, wherein a connection portion of one of the inclined frames and the rear frame, and a connection portion of another of the inclined frames and the rear frame, are disposed with an interval therebetween in the vehicle transverse direction.

### (Note 8)

The vehicle frame structure of any one of Note 1 through 7, wherein, as seen in a plan view, a vehicle transverse direction central portion of the rear frame is positioned further toward a vehicle front side than vehicle transverse direction end portions of the rear frame.

### (Note 9)

The vehicle frame structure of any one of Note 1 through 8, wherein the front frame portion is formed integrally by casting.

### (Note 10)

The vehicle frame structure of any one of Note 1 through 9, wherein the front frame is fixed to an upper end portion of a radiator.

## Claims

1. A vehicle frame structure comprising:
a front frame portion (12) structured to include a pair of left and right front side member portions (14) extending in a vehicle longitudinal direction at a vehicle front portion, and a pair of left and right apron upper member portions (16) disposed at a vehicle upper side and vehicle transverse direction outer sides of the front side member portions (14); and
a reinforcing frame (30) fixed to the front frame portion (12),
wherein the reinforcing frame (30) is structured to include a front frame (32) connecting the pair of left and right front side member portions (14) together in a vehicle transverse direction, a pair of left and right side frames (34) respectively extending toward a vehicle rear side from vehicle transverse direction both end portions of the front frame (32) and connected to the apron upper member portions, a rear frame (38) disposed further toward a vehicle rear side than the front frame (32), extending in the vehicle transverse direction, and connecting the pair of left and right apron upper member portions (16), and a pair of left and right inclined frames (36) extending at inclines toward a vehicle rear side and vehicle transverse direction inner sides from connection portions (P2) at which the front frame and the side frames (34) are connected, and connected to the rear frame (38).

2. The vehicle frame structure of claim 1, wherein the side frames (34) extend toward a vehicle rear side and vehicle transverse direction outer sides.

3. The vehicle frame structure of claim 1 or 2, wherein:
suspension tower portions (18) are provided between the front side member portions (14) and the apron upper member portions (16), and
the connection portions (P2) of the front frame (32) and the side frames (34) are disposed further toward a vehicle front side than the suspension tower portions (18).

4. The vehicle frame structure of claim 3, wherein connection portions of the rear frame (38) and the apron upper member portions (16) are disposed further toward a vehicle rear side than the suspension tower portions (18).

5. The vehicle frame structure of claim 3 or claim 4, wherein the rear frame (38) is fixed to the suspension tower portions (18).

6. The vehicle frame structure according to any of claims 1 to 5, wherein convex portions (34A) that bulge out toward vehicle outer sides are provided at the side frames (34), between the front frame (32) and the rear frame (38).

7. The vehicle frame structure according to any of claims 1 to 6, wherein a connection portion (P3) of one of the inclined frames (36) and the rear frame (38), and a connection portion (P3) of another of the inclined frames (36) and the rear frame (38), are disposed with an interval therebetween in the vehicle transverse direction.

8. The vehicle frame structure according to any of claims 1 to 7, wherein, as seen in a plan view, a vehicle transverse direction central portion of the rear frame (38) is positioned further toward a vehicle front side than vehicle transverse direction end portions of the rear frame (38).

9. The vehicle frame structure according to any of claims 1 to 8, wherein the front frame portion (12) is formed integrally by casting.

10. The vehicle frame structure according to any of claims 1 to 9, wherein the front frame (32) is fixed to an upper end portion of a radiator.
